(19) Europäisches Patentamt
European Patent Office
Office européen des brevets

(11) Publication number: **0 480 383 A2**

(12) **EUROPEAN PATENT APPLICATION**

(21) Application number: **91117157.7**

(51) Int. Cl.[5]: **C08K 5/07**, C08L 71/12

(22) Date of filing: **08.10.91**

(30) Priority: **10.10.90 IT 2169990**

(43) Date of publication of application:
**15.04.92 Bulletin 92/16**

(84) Designated Contracting States:
**AT BE CH DE DK ES FR GB GR IT LI LU NL SE**

(71) Applicant: **ECP ENICHEM POLIMERI S.r.l.**
**16, Piazza della Repubblica**
**I-20124 Milano(IT)**

(72) Inventor: **Casarini, Andrea, Dr.**
**8, Via Marchesi**
**I-20067 Paullo, Milan(IT)**
Inventor: **Della Fortuna, Giorgio, Dr.**
**5, Via delle Ande**
**I-20151 Milan(IT)**
Inventor: **De Chirico, Aurelio, Dr.**
**4, Via Gramsci**
**I-20097 San Donato Milanese, Milan(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Polyphenylene oxide compositions stabilized with beta-diketones.**

(57) Disclosed are polymeric compositions having excellent thermal stability and containing polyphenylene ether or a blend thereof with at least one (co)polymer of styrene as well as at least one linear and/or cyclic beta-diketone.

Said beta-diketones are capable of endowing said compositions with a long-lasting thermal stability in the molten state and of ensuring sufficient fluidity, resulting in improved processability of said compositions.

EP 0 480 383 A2

The present invention relates to polymeric compositions which show an excellent fluidity in the molten state and significantly improved thermal stability, obtained by adding at least one beta-diketone of general formulae (I), (II), (IIB) and (III) given below to at least one polyphenylene ether (PPE) or blends or polymeric alloys thereof with at least one (co)polymer of styrene.

It is known that polyphenylene oxides, also known as polyphenylene ethers (PPE), obtained from the (co)polymerization (by oxidative coupling) of one or more substituted phenols, cannot be used easily as such because of their high viscosity in the molten state, the consequently high operating temperatures required and their high degree of thermo-oxidative sensitivity which causes colour changes (darkening), partial cross-linking and gelation of the polymer during the processing thereof.

The combination of PPE with one or more styrenic resins considerably reduces the operating temperature and results in compositions which can be processed more easily and show a mutual improvement in the intrinsic properties of the constituents. By varying the ratios of polyphenylene oxide to styrenic polymer and depending on the application requirements, shock resistant polyphenylene oxide with improved processability or styrene homo- and copolymers with improved heat and flame resistance, better impact strength and technological properties can be obtained.

It is also known, however, that not only PPE, but also its blends with styrenic homo- and copolymers, in spite of the above improvements, undergo changes in the molecular structure at the high transformation temperatures of the manufacturing processes.

With particular reference to polyphenylene oxide, thermal degradation processes occur, with a consequent decrease in the molecular dimensions. At the same time a combination of macromolecules can take place, caused by radicalic processes due to the oxygen in the air and triggered by the presence of catalytic residues. In the case of PPE obtained by the oxidative coupling of 2,6-dimethylphenol these combinations are caused by the methyl groups which are present in the polymeric chain as substituents of the benzene ring in positions 2 and 6.

The overall effect of this change is a general decrease, even if limited, of the number average molecular weight of the PPE and in some cases an increase in the weight average molecular weight thereof, with a consequent variation in the molecular weight distribution. When the cross-linking process is particularly vigorous, varying quantities of gel can be formed.

It is known that the effects of heat degradation can considerably be reduced by means of suitable stabilizers belonging to different classes of compounds and showing varying degrees of effectiveness, such as alkyl and aryl phosphites, sterically hindered phenols, thioethers of esters of aliphatic carboxylic acids, dithiocarbamates of heavy metals, 2-mercaptobenzimidazole, 2-mercaptobenzotriazole, 2,4-bis(n-octylthio)-6-(4-hydroxy-di-t-butyl-aniline)-1,3,5 triazine, hexamethylphosphoramide, etc.

On the other hand, the cross-linking reactions triggered by radicalic processes cannot be controlled by the above additives and generally require the use of chemical compounds having peculiar structures.

These compounds probably neutralize the radicalic systems present in a latent state in the polyphenylene oxide, their effects becoming manifest when the material is heated to high transformation temperatures.

Transformation technology requires the polymeric material to have sufficient thermal stability so as to ensure only slight variations in the molecular weight, guaranteeing an almost constant degree of fluidity. This is necessary in order to obtain manufactured articles with satisfactory technological properties at a high output rate.

The patent literature discloses several compounds which are effective additives for thermally stabilizing polyphenylene oxide and/or its blends with styrenic polymers, in the sense of maintaining the fluidity of the material in its molten state at a suitable level.

These compounds, for example, are aliphatic and cycloaliphatic conjugated dienic compounds, dienophilic ethylenic compounds and precursors thereof.

EP-A-121 974 mentions cyclopentadiene, N-alkyl or N-aryl substituted maleimide, acenaphthylene, indene, maleic anhydride and mixtures of maleic anhydride with primary amines.

The use of imides of maleic acid is claimed in EP-A-222 246, whereas EP-A-257 486 describes the use of alkyl and/or alkylaryl esters of maleic and fumaric acids as heat stabilizing agents.

All the substances used as stabilizers in the prior art contain either heteroatoms or unsaturations in the molecule, which can cause an increase in the yellowing index of the polymeric compositions containing them, and in some cases a bad smell of the corresponding products results (e.g. with stabilizers containing sulphur).

FR-A-2,297,227 describes the use of beta-diketones and beta-ketoaldehydes as co-stabilizers of polyvinylchloride in combination with carboxylic acid soaps of certain bivalent metals such as zinc and barium. The presence of these soaps is considered indispensable and the beta-diketones and beta-ketoaldehydes are regarded as secondary stabilizers only. Their effectiveness is closely linked to the presence of labile chlorine atoms in allylic positions of the polyvinylchloride molecules.

Said additives, by substituting the allylic chlorine atoms, graft themselves onto the polyvinylchloride molecule, thus preventing or reducing further dehydrochlorination through the formation of polymeric sequences which are also responsible for dark colouring.

The present invention is based on the surprising finding that some beta-diketones are capable of endowing polyphenylene oxide and its blends with styrenic polymers with a long-lasting thermal stability in the molten state and at the same time ensure a sufficient fluidity to allow improved processability thereof.

The effectiveness of beta-diketones as stabilizers of polyphenylene oxide and its blends is unexpected in that the polyphenylene oxide molecule does not normally contain chlorine or any other halogen atoms and, owing to the efficiency of these stabilizers, the additional presence of soaps is not required at all. In addition, also cyclic beta-diketones have proved to be extremely suitable for the purposes of the present invention.

The stabilizing additives according to the present invention can be represented by general formulae (I), (II), (IIB) and (III):

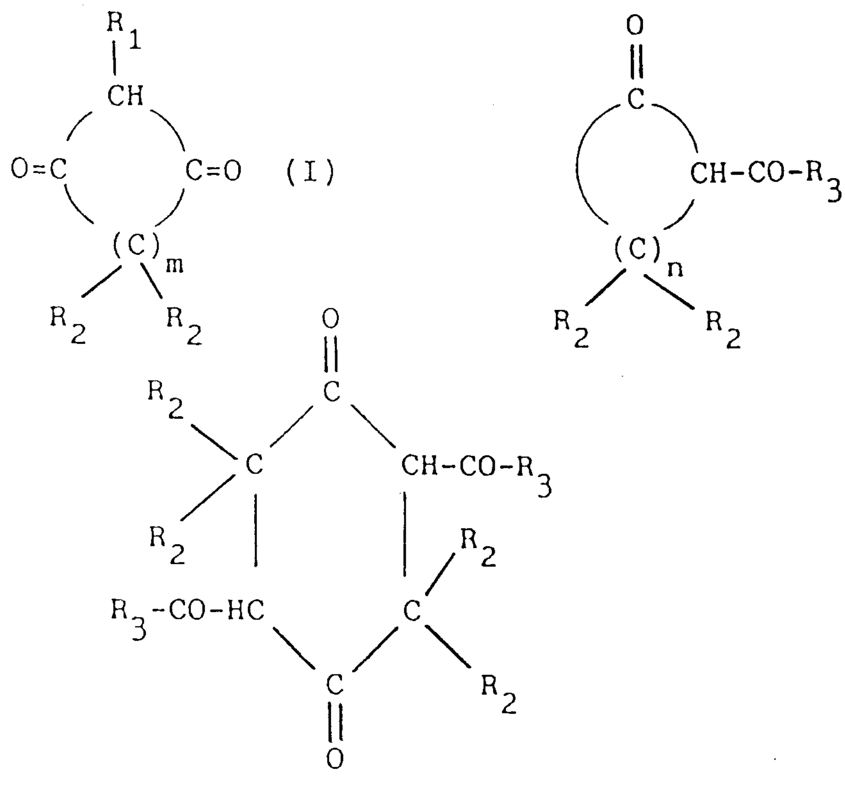

(I)

(II)

(IIB)

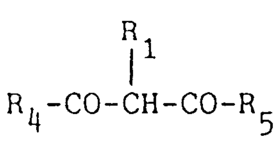

(III)

wherein m is an integer of from 2 to 5 (particularly 2 or 3), n is an integer of from 3 to 6 (particularly 3 or 4), $R_1$ and $R_2$, the same or different from each other, represent hydrogen, alkyl, cycloalkyl, arylalkyl, aryl, haloalkyl, acyl, aroyl, chlorine, bromine, a group of formula $-(CH_2)_x-COOR_6$, x being an integer ranging of from 1 to 5 and $R_6$ being selected from hydrogen, alkyl, cycloalkyl, arylalkyl, aryl, alkylaryl, haloalkyl, haloaryl and haloalkylaryl; and $R_3$, $R_4$ and $R_5$, the same or different from each other, are selected from hydrogen, alkyl, cycloalkyl, arylalkyl, haloalkyl, aryl, alkylaryl, haloaryl, haloalkylaryl, $-OR_7$, $-N(R_7)_2$, $-CH_2R_7$, $-CH_2-COR_7$ and $CH_2-COOR_7$, $R_7$ representing hydrogen, alkyl, cycloalkyl, arylalkyl, haloalkyl, aryl, alkylaryl, haloaryl or haloalkylaryl.

Preferred examples of the above groups have the following number of carbon atoms:

| | |
|---|---|
| (halo-)alkyl: | 1 to 12, particularly 1 to 6 (e.g. methyl and ethyl); |
| cycloalkyl: | 3 to 10, particularly 4 to 8 (e.g. cyclopentyl and cyclohexyl); |
| (halo-)aryl: | 6 to 14, particularly 6 to 10 (e.g. phenyl); |
| arylalkyl and (halo-)alkylaryl: | 7 to 15, particularly 7 to 11 (e.g. benzyl, phenethyl, tolyl and xylyl); |
| acyl: | 1 to 10, particularly 2 to 6 (e.g. acetyl and propionyl); |
| aroyl: | 7 to 15, particularly 7 to 11 (e.g. benzoyl and naphthoyl); |

examples of halogen substituents are fluoro, chloro and bromo, particularly chloro; one or more of said substituents can be present in a corresponding group.

Preferred stabilizers for the purposes of the present invention are the compounds of formula (I), (II), (IIB) and (III) wherein $R_1$ is hydrogen and $R_3$ is $-OR_7$ or $-N(R_7)_2$.

specific examples of compounds suitable for the present invention and having formula (I) are cyclopentane-1,3-dione, 2-methyl-cyclopentane-1,3-dione, cyclohexane-1,3-dione, 2-methyl-cyclohexane-1,3-dione and 5,5-dimethyl-cyclohexane-1,3-dione.

Specific examples of compounds of formula (II) are 2-methoxycarbonylcyclopentanone,2-ethoxycarbonylcyclopentanone and 2-ethoxycarbonyl cyclohexanone.

Specific examples of compounds of formula (IIB) are diethylcyclohexane-1,4-dione-2,5-dicarboxylate (also known as diethylsuccinylosuccinate) and dimethyl-cyclohexane-1,4-dione-2,5-dicarboxylate (also known as dimethylsuccinylosuccinate).

Specific examples of compounds of formula (III) are 2,4-pentanedione, 1-phenyl-1,3-butanedione, 2,4-octanedione, 1,3-diphenyl-2,4-pentanedione, 1,3-diphenyl-1,3-propanedione (commercially available as Rhodiastab® 83 of Rhone-Poulenc), 1,4-diphenyl-1,3-butanedione, 1-phenyl-5-methyl-1,3-hexanedione (Rhodiastab® 82 of Rhone-Poulenc), stearoylbenzoylmethane (Rhodiastab® 50 of Rhone-Poulenc), 1,5-diphenyl-1,3,5-pentanetrione, ethyl acetoacetate, ethyl benzoylacetate, ethyl 2-benzylacetoace-tate, acetoacetanilide, diethyl-1,3-acetone dicarboxylate, ethyl phenylmalonate, ethyl ethylmalonate, ethyl malonate, t-butyl malonate, ethyl 2-acetylglutarate, ethyl acetylsuccinate and methyl acetylsuccinate.

These stabilizers are particularly effective at a concentration of 0.05 to 10 parts by weight per 100 parts by weight of polyphenylene oxide or its blends with homo- and/or copolymers of styrene. The best results are obtained with quantities of stabilizer ranging from 0.1 to 4 parts by weight per 100 parts by weight of polyphenylene oxide or its blends.

These stabilizers can be added to the polyphenylene oxide or its blends with (co)polymers of styrene by using any of the techniques known for this purpose.

In any case, the addition of the stabilizing system of the present invention causes a decrease in the reactions which result in an increase of the molecular dimensions of the polyphenylene oxide, thus leading to a considerable improvement in the fluidity under the required operating and transformation conditions of the polyphenylene oxide and its blends.

Polyphenylene ethers (PPE) are compounds which have been known for a long time. They are described in numerous patents, and are generally obtained by means of oxidative coupling of one or more alkylphenols in the presence of a suitable catalyst, the most widely used alkylphenol being 2,6-dimethylphenol. They correspond to the general formula (IV):

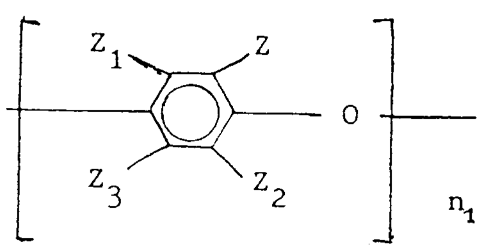

(IV)

wherein Z, $Z_1$, $Z_2$ and $Z_3$ are independently selected from hydrogen, chlorine, bromine, fluorine, alkyl (e.g. $C_1$-$C_4$ alkyl) substituted alkyl, cycloalkyl (e.g. $C_5$-$C_8$ cycloalkyl), substituted cycloalkyl, phenyl and substituted phenyl, and $n_1$ represents the total number of monomeric units and is an integer of at least (and preferably higher than) 50.

Equally suitable for the purposes of the present invention are polyphenylene ethers corresponding to the general formulae (V) and (VI):

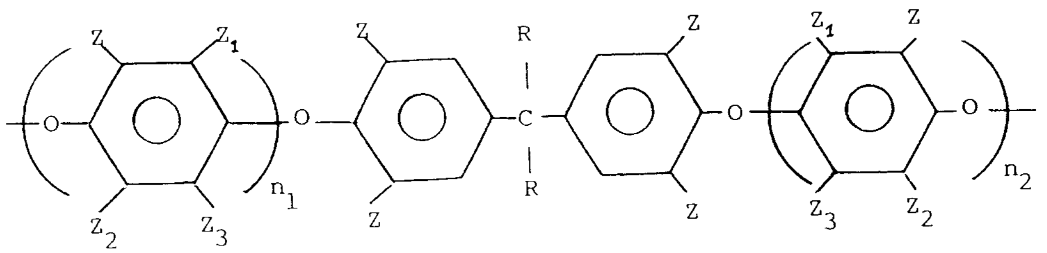

(V)

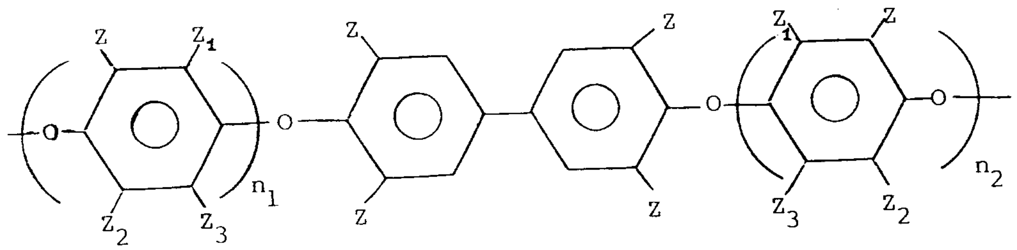

(VI)

wherein Z, $Z_1$, $Z_2$ and $Z_3$ have the same meanings as in formula (IV) above and $n_1$ and $n_2$ are integers whose sum is at least (and preferably higher than) 50 and R is hydrogen or (preferably $C_1$-$C_8$) alkyl (e.g. methyl or ethyl).

Non-limiting examples of PPEs which can be used for the production of the polymeric compositions of the present invention and articles made therefrom are
poly(2,6-dimethyl-1,4-phenylene ether);
poly(2,6-diethyl-1,4-phenylene ether);
poly(2-methyl-6-ethyl-1,4-phenylene ether);
poly(2-methyl-6-propyl-1,4-phenylene ether);
poly(2,6-dipropyl-1,4-phenylene ether);
poly(2,3,6-trimethyl-1,4-phenylene ether);
poly(2-chloro-1,4-phenylene ether);
poly(2-bromo-1,4-phenylene ether);
poly(2-phenyl-1,4-phenylene ether);
poly(2-chloro-6-bromo-1,4-phenylene ether); and
poly(2,6-dichloro-1,4-phenylene ether).

It is particularly preferable to use poly(2,6-dimethyl-1,4-phenylene ether) for which, in formula (IV), $Z_1 = Z_3 = H$; and $Z = Z_2 = CH_3$.

The preferred poly(2,6-dimethyl-1,4-phenylene ether) has a weight average molecular weight $\overline{MW}$ of from about 8,000 to about 80,000, particularly from about 15,000 to about 60,000, and an intrinsic viscosity, measured in chloroform at 25° C, of from 0.3 to 0.7 dl/g.

Equally suited for the purposes of the present invention are PPEs obtained by the oxidative coupling of two or more different phenols. Preferably, in these copolymers one of the two or more monomeric units is derived from 2,6-dimethylphenol and the preferred comonomer is 2,3,6-trimethylphenol.

As is widely known, the oxidative condensation of 2,6-xylenol is catalyzed by complexes of cupric salts with aliphatic amines; the present invention is independent of the catalytic system employed.

The methods of preparation of the polyphenylene ethers suitable for the present invention are well known to experts in this field. For example, the PPEs corresponding to formulae (V) and (VI) are described in "Die Makromolekulare Chemie" Vo. 186, (1985) pages 1835-1853.

The (co)polymers of styrene (or styrene resins) used for the purposes of the present invention may be polymers, copolymers, interpolymers, random or block, linear or branched or graft, which contain styrenic units.

Examples of these resins are polystyrene (PS), high impact polystyrene (HIPS), polystyrene grafted onto any polymeric, plastic or thermoplastic substrate, ABS resins, SBR rubbers, linear or star-shaped copolymers based on polystyrene or grafted with polystyrene, various copolymers or interpolymers of styrene with different monomers, e.g., styrene-maleic anhydride, styrene-maleimide, styrene-(meth)acrylic acid, styrene-(meth)acrylate, acrylonitrile-styrene-acrylate,methacrylateacrylonitrile-butadiene-styrene copolymers, etc.

The preparation of the above styrenic resins is also well known to experts in this field.

The polymeric compositions according to the present invention preferably contain from 1 to 99, particularly from 20 to 80 parts by weight of polyphenylene oxide per 100 parts by weight of composition and from 0.95 to 99% by weight of styrenic resin(s). In fact it is possible, depending on the intended use of the polymeric blend, to obtain compositions with good mechanical properties (using low percentages of polystyrene), i.e., a modified polyphenylene oxide, or to prepare compositions which are rich in polystyrene and show a better processability but less satisfactory mechanical properties.

Compositions which contain from 0.95 to 80% by weight of styrenic resin(s) are particularly preferred.

Polymeric blends having a mixture of overall favourable characteristics such as good mechanical properties, good processability, thermal stability and reasonable flame-resistance generally contain about equal parts by weight of polyphenylene oxide and styrenic resin(s). This is advantageous also from an economical point of view.

The excellent balance of properties of the above polymeric compositions makes it possible to use them in a wide range of fields, including applications in the medical and biological fields (sterilization), as components for electrical and electronic equipment (electrical properties), and cars (limited water absorption and shock-resistant properties) and in general as replacement for metallic parts (low water absorption, dimensional stability etc.).

The compositions of the present invention may also contain one or more of the auxiliary agents conventionally used in this field, such as plasticizers, primary and secondary antioxidants, detaching agents, lubricants, flame retardants, antistatic agents, dyes, pigments, mineral fillers, reinforcing agents such as glass fibers, microspheres etc.

The polyphenylene oxide used in the following examples was obtained by the oxidative condensation of 2,6-xylenol, using the process described by the applicant in IT-A-24024/83. The samples of homopolymer and its blends were characterized by measurements of:

- Intrinsic viscosity ($\eta$):
  This property was determined in a chloroform solution at 25 °C using an Ubbelohde viscometer and is expressed in dl/g.
- Melt Flow Index (MFI):
  The determination of the melt flow index was carried out in a melt indexer with a load of 5 kg and a temperature range of 280-300 °C according to ASTM D 1238.
-

Weight average molecular weight ($\overline{MW}$):

This measurement was carried out by gel permeation chromatography of polymer solutions in tetrahydrofuran (conc. 0.1%, temperature 25 °C).

The polymeric compositions referred to in the following examples were prepared with a styrene-butadiene polymer of high impact strength (Edistir® SRL 640 - Montedipe) having a melt flow index of 2.9 g/10 min, measured at 200 °C with a load of 5 kg.

The blends were prepared by extruding the components fed in the predetermined ratios with a single-screw extruder (screw diameter 20 mm; L/D = 20) at a temperature of 280 °C and a screw speed of 50 rpm.

The following examples are to further illustrate the present invention without limiting it in any way.

EXAMPLE 1

A sample of polyphenylene oxide with [$\eta$] = 0.54 dl/g is dissolved in a mixture of toluene/chloroform (75/25 by volume). Dibenzoylmethane is added to the solution in an amount such as to afford 1.5 phr with respect to the polymer. The solvent is then removed at reduced pressure, the solid is crushed in a rotating blade mill and the powder obtained is dried to constant weight in a vacuum oven heated to 65 - 70 °C.

The product is then introduced into a melt flow indexer heated to 320 °C. The gage of the instrument is charged with an adequate amount to allow the extrusion of the polymeric mass. The material is collected at different times and $\overline{MW}$ and MFI thereof are measured.

As a comparison, a polymer sample without the additive is treated in the same way. Table 1 below shows the results obtained.

TABLE 1

| Residence time at 320°C (min.) | MFI at 320°C (1) (g/10') 2.16 kg | (2) (g/10') 12 kg | $\overline{MW}$ (1) | (2) |
|---|---|---|---|---|
| 0 | – | – | 43,800 | 43,800 |
| 7 | 2 | 1.8 | 54,400 | 82,600 |
| 9 | 1.3 | 1.8 | 60,200 | 88,950 |
| 11 | 1.2 | 1.6 | 60,900 | 95,100 |
| 14 | *2.3 | 1.2 | 63,600 | 102,200 |

* MFI value was determined with a load of 5 kg.

(1) sample with dibenzoylmethane

(2) sample without dibenzoylmethane

As can be seen from Table 1, the addition of the additive considerably limits the increase of $\overline{MW}$ caused by the temperature.

EXAMPLE 2

Another sample of polyphenylene oxide having a different molecular weight ([$\eta$] = 0.42 dl/g) is treated as described in example 1.

Also in this case, the addition of dibenzoylmethane considerable reduces the branching process of the polymer (see Table 2).

TABLE 2

| Residence time at 320°C (min.) | $\overline{MW}$ | |
|---|---|---|
| | Samples with dibenzoylmethane | Samples without dibenzoylmethane |
| 0 | 28,000 | 28,000 |
| 7 | 39,000 | 62,000 |
| 9 | 40,500 | 65,000 |
| 11 | 41,000 | 70,000 |
| 13 | 41,000 | 68,700 |
| 16 | 44,000 | 68,000 |

EXAMPLE 3

45 parts by weight of polyphenylene oxide ([$\eta$] = 0.56 dl/g) are thoroughly mixed with 55 parts of styrenic polymer (Edistir® SRL 640). 1.5 parts of carbon black X-E2, 1.5 parts of an ester of phosphorous acid and 1.5 parts of dibenzoylmethane are then added.

The mixture is treated in a single-screw extruder at a temperature of 280°C and the extruded material is cooled in water and collected.

The extrusion is consecutively repeated several times to determine the variations in the viscosity of the molten material in relation to the number of extrusions, i.e., the number of thermal treatments to which the material is subjected.

As a comparison, a mixture composed of the same ingredients but without the diketone additive is treated in the same way. The results are shown in Table 3 below.

TABLE 3

| Number of extrusions | MFI at 280°C (g/10 min) with 5 kg | |
|---|---|---|
| | Comparison | Invention |
| 1 | 2.9 | 6.3 |
| 3 | 2.9 | 6.7 |
| 5 | 3.4 | 7.1 |
| 7 | 3.7 | 7.5 |

From the above it can be seen that the addition of dibenzoylmethane to the blend results in a much higher fluidity of the molten material. This effect is particularly evident in Table 4 which shows the viscosity values of the molten material at different flow rates for the blend with and without the additive.

TABLE 4

| Flow rate ($sec^{-1}$) | Viscosity of the molten material at 280°C (Pa.s) | |
|---|---|---|
| | Invention | Comparison |
| 48 | 742 | 1,484 |
| 96 | 631 | 1,187 |
| 192 | 519 | 872 |
| 480 | 341 | 497 |
| 960 | 234 | 323 |
| 1920 | 158 | 202 |

EXAMPLE 4

45 parts of polyphenylene oxide ([$\eta$] = 0.54 dl/g) are mixed with 55 parts of Edistir® SRL 640. Thereafter 0.2 parts of a sterically hindered phenol and 0.4 parts of an ester of phosphorous acid are added to the mixture, followed by 1.5 parts of dibenzoyl methane. The resulting mixture is extruded in a single-screw extruder.

The extruded material is cooled in water and cut into granules which, after drying, are subjected to a thermal stability test in a melt flow indexer. This test consists of the calculation of the fluidity index at 300°C with a load of 5 kg. Table 5 below shows the results.

EXAMPLE 5

Using the same procedure as in example 4, 1.5 parts of 1,5-diphenyl-1,3,5-pentanetrione are added to the mixture as thermal stabilizer. The results obtained are shown in Table 5 and by comparing said results with those of the control test (without any additive) it is possible to see the effectiveness of compounds containing methylene groups with active hydrogen atoms for the stabilization of blends of polyphenylene oxide, which results in a fluidification of the molten mass.

TABLE 5

| Residence time (minutes) | 0 | 10 | 20 | 30 |
|---|---|---|---|---|
| Type of additive | MFI at 300°C - 5 kg (g/10 min) | | | |
| dibenzoylmethane | 19.4 | 20.6 | 20.6 | 20.8 |
| 1,5-diphenyl-1,3,5 pentanetrione | 16.6 | 16.5 | 16.9 | 16.9 |
| comparison without additive | 7.9 | 8.7 | 9.5 | 10.4 |

EXAMPLE 6

Using the procedure described in example 4, the same quantities of components are employed, but using phenylbenzylketone (1.5 parts) as stabilizing compound, and adding 1.5 parts of carbon black X-E2.

The effect of the stabilizer can be seen from the fluidification of the blend as shown in the thermal stability test carried out in a melt flow indexer at 300°C with a load of 5 kg (see Table 6).

TABLE 6

| Residence time (minutes) | 0 | 10 | 20 | 30 |
|---|---|---|---|---|
| Type of additive | MFI at 300°C - 5 kg (g/10') | | | |
| phenyl-benzyl-ketone | 9.3 | 10.8 | 11.9 | 11.6 |
| comparison without additive | 6.1 | 6.2 | 6.7 | 7.3 |

EXAMPLES 7 TO 9

45 parts of polyphenylene oxide ([$\eta$] = 0.56 dl/g), 55 parts of Edistir® SRL 640, 1.5 parts of an ester of phosphorous acid anc 1.5 parts of carbon black X-E2 are mixed with 1.5 parts of the stabilizing compounds indicated in Table 7 below. The mixtures are extruded in a single-screw extruder and the extruded material is cooled with water and cut into granules, which, after drying, are subjected to a thermal stability test in a melt flow indexer at 300°C with an applied load of 5 kg.

At the same time a mixture without the stabilizing additive is extruded and analyzed as a comparison.

The results shown in Table 7 confirm the effectiveness of the methylene compounds with active hydrogen atoms, even when they are part of a cycloaliphatic ring.

TABLE 7

| Residence time (minutes) | | 0 | 10 | 20 | 30 |
|---|---|---|---|---|---|
| Example | Additive | MFI 300°C - 5 kg (g/10') | | | |
| 7 | 1-phenyl-1,3-butanedione | 16 | 16.6 | 16.4 | 18.7 |
| 8 | 5,5-dimethyl-1,3-cyclohexanedione | 17 | 18.6 | 19.3 | 21.1 |
| 9 | 2-methyl-1,3-cyclopentanedione | 15.4 | 16.7 | 15.5 | 15.9 |
| | comparison without additive | 6.8 | 6.6 | 6.2 | 6.5 |

## Claims

**1.** Polymeric compositions based on at least one polyphenylene ether (PPE) obtained by oxidative coupling of one or more substituted phenols, either as such or in combination with at least one (co)-polymer of styrene, said compositions containing at least one stabilizer selected from compounds of general formulae (I), (II), (IIB) and (III):

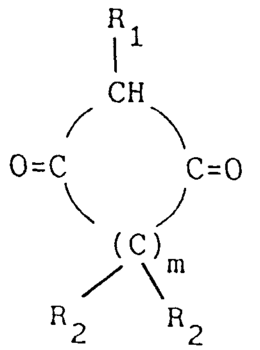

(I)

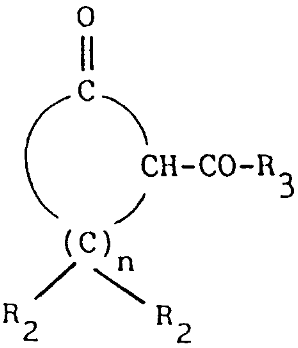

(II)

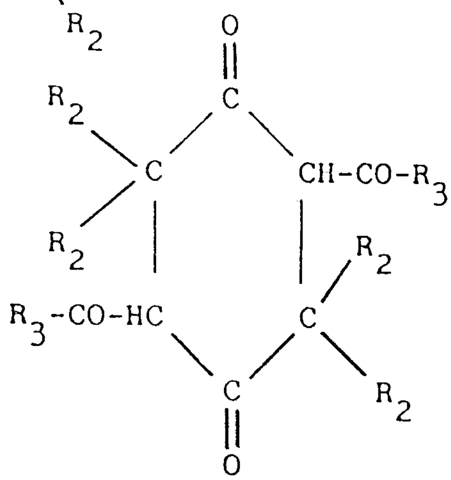

(IIB)

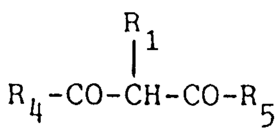

(III)

wherein m is an integer of from 2 to 5, n is an integer of from 3 to 6, $R_1$ and $R_2$, the same or different from each other, represent hydrogen, alkyl, cycloalkyl, arylalkyl, aryl, haloalkyl, acyl, aroyl, chlorine, bromine or a group of formula $(-CH_2)_x-COOR_6$, x being an integer of from 1 to 5 and $R_6$ being selected from hydrogen, alkyl, cycloalkyl, arylalkyl, aryl, alkylaryl, haloalkyl, haloaryl and haloarylalkyl; $R_3$, $R_4$ and $R_5$, the same or different from each other, are selected from hydrogen, alkyl, cycloalkyl, arylalkyl, haloalkyl, aryl, alkylaryl, haloaryl, haloalkylaryl, $-OR_7$, $-N(R_7)_2$, $-CH_2R_7$, $-CH_2-COR_7$ and $-CH_2-COOR_7$, $R_7$ representing hydrogen, alkyl, cycloalkyl, arylalkyl, haloalkyl, aryl, alkylaryl, haloaryl or haloalkylaryl.

**2.** Compositions according to claim 1, wherein $R_1$ in formulae (I) and (III) represents hydrogen and/or $R_3$ in formulae (II) and (IIB) is $-OR_7$, $R_7$ being preferably alkyl,or $-N(R_7)_2$ wherein each $R_7$ is independently selected from the groups specified in claim 1.

**3.** Compositions according to claim 1 or claim 2 wherein the polyphenylene ether is at least one of general formulae (IV) to (VI):

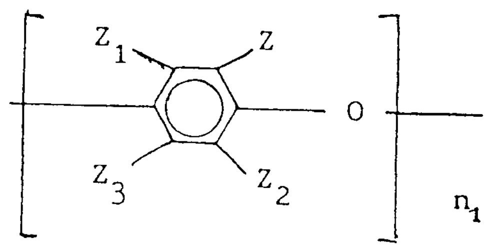

(IV)

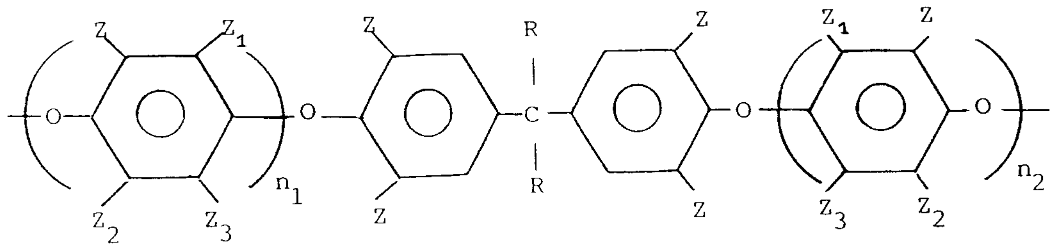

(V)

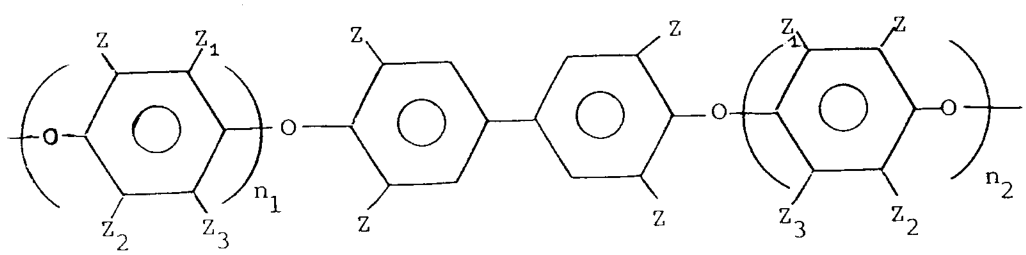

(VI)

wherein Z, $Z_1$, $Z_2$ und $Z_3$ are independently selected from hydrogen, chlorine, bromine, fluorine, alkyl, substituted alkyl, cycloalkyl, substituted cycloalkyl, phenyl and substituted phenyl; R is hydrogen or alkyl and $n_1$ and $n_2$ are integers whose sum is at least 50.

**4.** Compositions according to any one of the preceding claims, wherein the PPE comprises poly(2,6-dimethyl-1,4-phenylene ether) and/or at least one copolymer of 2,6-dimethylphenol and one or more alkylphenols which give rise to units of general formula (IV), particularly a copolymer derived from 2,6-dimethylphenol and 2,3,6-trimethylphenol.

**5.** Compositions according to any one of the preceding claims, wherein the PPE has an intrinsic viscosity of from 0.3 to 0.7 dl/g in chloroform solution at 25 ° C.

**6.** Compositions according to any one of the preceding claims, wherein the concentration of the PPE ranges from 1 to 99% by weight, particularly from 20 to 80% by weight.

**7.** Compositions according to any one of the preceding claims, wherein the (co)polymer of styrene is a homopolymer, copolymer, interpolymer, random or block, linear, branched or graft (co)polymer containing units derived from styrene and particularly is selected from polystyrene (PS), high impact polystyrene (HIPS), polystyrene grafted onto any polymeric, plastic or thermoplastic substrate, ABS resins, SBR rubbers, linear or star-shaped copolymers based on polystyrene or grafted with polystyrene and copolymers or interpolymers of styrene and various monomers, e.g., styrene-maleic anhydride, styrene-maleimide, styrene-(meth)acrylic acid, styrene-(meth)acrylate, acrylonitrile-styrene-acrylate and methacrylate-acrylonitrile-butadiene-styrene copolymers; and mixtures thereof.

**8.** Compositions according to any one of the preceding claims, wherein the concentration of the (co)-polymer(s) of styrene ranges from 0.95 to 80% by weight.

**9.** Compositions according to any one of the preceding claims, wherein the stabilizer is selected from dibenzoylmethane, 1,5-diphenyl-1,3,5-pentanetrione, phenyl benzylketone, 1-phenyl-1,3-butanedione,

5,5-dimethyl-1,3-cyclohexanedione, 2-methyl-1,3-cyclopentanedione; and mixtures of said compounds.

**10.** Compositions according to any one of the preceding claims, wherein the stabilizer(s) is (are) used in amounts of from 0.1 to 4 parts by weight per 100 parts by weight of PPE or its blends.

**11.** Moulded articles, obtainable from the compositions according to any one of claims 1 to 10.